# EUROPEAN PATENT SPECIFICATION

(11) **EP 4 151 686 B1**
(45) Date of publication and mention of the grant of the patent: **19.02.2025**
(21) Application number: 21196819.3
(22) Date of filing: 15.09.2021
(51) Int. Cl.: C08L 71/12, C08G 65/48

(54) **POLY(PHENYLENE ETHER) COMPOSITION AND ARTICLE**
POLY(PHENYLENETHER)-ZUSAMMENSETZUNG UND ARTIKEL
COMPOSITION DE POLY(PHÉNYLÈNE ÉTHER) ET ARTICLE

(43) Date of publication of application: 22.03.2023
(73) Proprietor: SHPP Global Technologies B.V., 4612 PX Bergen op Zoom (NL)
(72) Inventor: Mao, Rui, Shanghai (CN); Lietzau, Christian, Delmar (US)
(74) Representative: Balder IP Law, S.L.

(56) References cited:
- WO-A1-2021/186252
- US-A1- 2014 073 725
- US-A1- 2014 128 522
- US-A1- 2016 009 902

## Description

### BACKGROUND OF THE INVENTION

Poly(phenylene ether) is a type of plastic known for its excellent heat resistance, water resistance, dimensional stability, and inherent flame retardancy. Properties such as strength, stiffness, chemical resistance, and heat resistance can be tailored by blending poly(phenylene ether) with various other plastics in order to meet the requirements of a wide variety of consumer and industrial products including, for example, components of commercial appliances, home appliances, photovoltaic systems, and automotive systems. When high impact strength is required, poly(phenylene ether) is typically blended with an impact modifier, but use of impact modifier reduces flame retardancy. To improve flame retardancy, organophosphate flame retardants are often used, but their addition usually reduces heat resistance. There is a need for impact-modified, flame-retardant-containing poly(phenylene ether) compositions exhibiting an improved balance of heat resistance and flame retardancy, without substantially compromising impact strength or melt flow.

US 2014/128522 A1 discloses a reinforced poly(phenylene ether)-polysiloxane block copolymer composition including a poly(phenylene ether)-polysiloxane block copolymer reaction product, a flame retardant, and a reinforcing filler.

### BRIEF SUMMARY OF EMBODIMENTS OF THE INVENTION

One embodiment is a composition comprising, based on the total weight of the composition: 55.5 to 90 weight percent of a first poly(phenylene ether); 3 to 17 weight percent of a poly(phenylene ether)-polysiloxane block copolymer reaction product comprising a second poly(phenylene ether), and a poly(phenylene ether)-polysiloxane block copolymer comprising a poly(phenylene ether) block, and a polysiloxane block comprising, on average, 20 to 80 siloxane repeat units; wherein the poly(phenylene ether)-polysiloxane block copolymer reaction product comprises 1 to 30 weight percent siloxane repeat units and 70 to 99 weight percent phenylene ether repeat units, based on the total weight of the poly(phenylene ether)-polysiloxane block copolymer reaction product; 3 to 10 weight percent of a hydrogenated block copolymer of an alkenyl aromatic compound and a conjugated diene; 4 to 13 weight percent of an organophosphate flame retardant; 0 to 2 weight percent of a reinforcing filler; 0 to 1 weight percent of an adhesion promoter selected from the group consisting of (a) phenolic compounds having a molecular weight of 94 to 18,000 daltons; (b) hydroxysilyl-terminated polydiorganosiloxanes of the formula 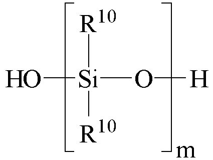 wherein m is 2 to 50, and each occurrence of R¹⁰ is independently C₁-C₁₂ hydrocarbyl, provided that 5 to 60 mole percent of the occurrences of R¹⁰ are independently C₆-C₁₂ aryl; and (c) combinations of the (a) phenolic compounds and the (b) hydroxysilyl-terminated polydiorganosiloxanes; and 0 to 0.5 weight percent of an addition polymer comprising repeat units derived from a glycidyl ester of an α,β-ethylenically unsaturated acid.

Another embodiment is an article comprising the composition in any of its variations described herein.

These and other embodiments are described in detail below.

### DETAILED DESCRIPTION OF THE INVENTION

The present inventors have determined that an improved balance of heat resistance (as manifested by heat distortion temperature) and flame retardancy (as manifested by first and second afterflame times in UL 94, 20 mm Vertical Burning Flame Test) is exhibited by a composition comprising specific amounts of a first poly(phenylene ether), a poly(phenylene ether)-polysiloxane block copolymer reaction product, a hydrogenated block copolymer of an alkenyl aromatic compound and a conjugated diene, and an organophosphate flame retardant. The composition minimizes or excludes reinforcing fillers, certain adhesion promoters, and addition polymers comprising repeat units derived from a glycidyl ester of an α,β-ethylenically unsaturated acid.

Thus, one embodiment is a composition comprising, based on the total weight of the composition: 55.5 to 90 weight percent of a first poly(phenylene ether); 3 to 17 weight percent of a poly(phenylene ether)-polysiloxane block copolymer reaction product comprising a second poly(phenylene ether), and a poly(phenylene ether)-polysiloxane block copolymer comprising a poly(phenylene ether) block, and a polysiloxane block comprising, on average, 20 to 80 siloxane repeat units; wherein the poly(phenylene ether)-polysiloxane block copolymer reaction product comprises 1 to 30 weight percent siloxane repeat units and 70 to 99 weight percent phenylene ether repeat units, based on the total weight of the poly(phenylene ether)-polysiloxane block copolymer reaction product; 3 to 10 weight percent of a hydrogenated block copolymer of an alkenyl aromatic compound and a conjugated diene; 4 to 13 weight percent of an organophosphate flame retardant; 0 to 2 weight percent of a reinforcing filler; 0 to 1 weight percent of an adhesion promoter selected from the group consisting of (a) phenolic compounds having a molecular weight of 94 to 18,000 daltons; (b) hydroxysilyl-terminated polydiorganosiloxanes of the formula 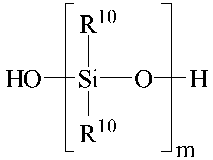 wherein m is 2 to 50, and each occurrence of R¹⁰ is independently C₁-C₁₂ hydrocarbyl, provided that 5 to 60 mole percent of the occurrences of R¹⁰ are independently C₆-C₁₂ aryl; and (c) combinations of the (a) phenolic compounds and the (b) hydroxysilyl-terminated polydiorganosiloxanes; and 0 to 0.5 weight percent of an addition polymer comprising repeat units derived from a glycidyl ester of an α,β-ethylenically unsaturated acid.

The composition comprises a first poly(phenylene ether). A poly(phenylene ether) is a polymer comprising repeat structural units having the formula 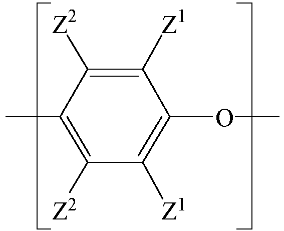 wherein each occurrence of Z¹ is independently halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each occurrence of Z² is independently hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. As one example, Z¹ can be a di-n-butylaminomethyl group formed by reaction of a terminal 3,5-dimethyl-1,4-phenyl group with the di-n-butylamine component of an oxidative polymerization catalyst.

The first poly(phenylene ether) can comprise molecules having aminoalkyl-containing end group(s), typically located in a position ortho to the hydroxyl group. Also frequently present are tetramethyldiphenoquinone (TMDQ) end groups, typically obtained from 2,6-dimethylphenol-containing reaction mixtures in which tetramethyldiphenoquinone by-product is present. The first poly(phenylene ether) can be in the form of a homopolymer, a copolymer, a graft copolymer, an ionomer, or a block copolymer, as well as combinations thereof. In some embodiments, the first poly(phenylene ether) can have an intrinsic viscosity of 0.3 to 0.6 deciliter/gram, measured at 25 °C in chloroform by Ubbelohde viscometer. In some embodiments, the first poly(phenylene ether) comprises a poly(2,6-dimethyl-1,4-phenylene ether) having an intrinsic viscosity of 0.4 to 0.5 deciliter/gram, measured at 25 °C in chloroform by Ubbelohde viscometer. Suitable poly(phenylene ether)s are commercially available as, for example, PPO 640 and PPO 646 resins from SABIC.

The composition comprises the first poly(phenylene ether) in an amount of 55.5 to 90 weight percent, based on the total weight of the composition. Within this range, the amount of the first poly(phenylene ether) can be 60 to 90 weight percent, or 65 to 85 weight percent, or 70 to 80 weight percent.

In addition to the first poly(phenylene ether), the composition comprises a poly(phenylene ether)-polysiloxane block copolymer reaction product. The poly(phenylene ether)-polysiloxane block copolymer reaction product comprises a second poly(phenylene ether), and a poly(phenylene ether)-polysiloxane block copolymer comprising a poly(phenylene ether) block, and a polysiloxane block comprising, on average, 20 to 80 siloxane repeat units. The poly(phenylene ether)-polysiloxane block copolymer can comprise more than one poly(phenylene ether) block and/or more than one polysiloxane block. The poly(phenylene ether)-polysiloxane block copolymer reaction product comprises 1 to 30 weight percent siloxane repeat units and 70 to 99 weight percent phenylene ether repeat units, based on the total weight of the poly(phenylene ether)-polysiloxane block copolymer reaction product. Within the range of 1 to 30 weight percent, the amount of siloxane units can be 1 to 20 weight percent, or 2 to 15 weight percent, or 2 to 10 weight percent, or 3 to 8 weight percent. Within the range of 70 to 99 weight percent, the amount of phenylene ether units can be 80 to 99 weight percent, or 85 to 98 weight percent, or 90 to 98 weight percent, or 92 to 97 weight percent.

The poly(phenylene ether)-polysiloxane block copolymer reaction product can be prepared by a process comprising oxidatively copolymerizing a monomer mixture comprising a monohydric phenol and a hydroxyaryl-terminated polysiloxane. The monohydric phenol can have the structure 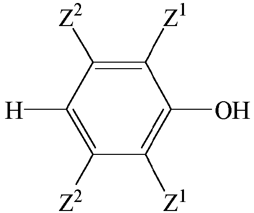 wherein each occurrence of Z¹ is independently halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each occurrence of Z² is independently hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms.

The hydroxyaryl-diterminated polysiloxane can comprise a plurality of repeat units having the structure 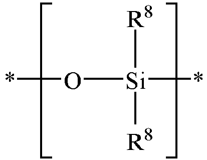 wherein each occurrence of R⁸ is independently C₁-C₁₂ hydrocarbyl or C₁-C₁₂ halohydrocarbyl. In some embodiments, the hydroxyaryl-diterminated polysiloxane further comprises two terminal units having the structure 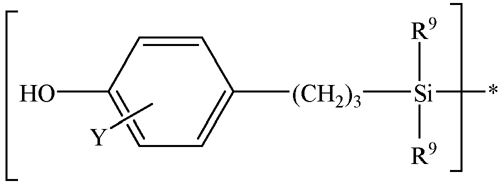 wherein Y is C₁-C₁₂ hydrocarbyl, C₁-C₁₂ hydrocarbyloxy, or halogen, and wherein each occurrence of R⁹ is independently C₁-C₁₂ hydrocarbyl or C₁-C₁₂ halohydrocarbyl. In some embodiments, each occurrence of R⁸ is independently C₁-C₁₂ hydrocarbyl. In some embodiments, each occurrence of R⁸ is independently aryl or substituted aryl. In a very specific embodiment, each occurrence of R⁸ and R⁹ is methyl, and Y is methoxyl.

In some embodiments, the monohydric phenol comprises 2,6-dimethylphenol, and the hydroxyaryl-diterminated polysiloxane comprises a hydroxyaryl-terminated polysiloxane having the structure 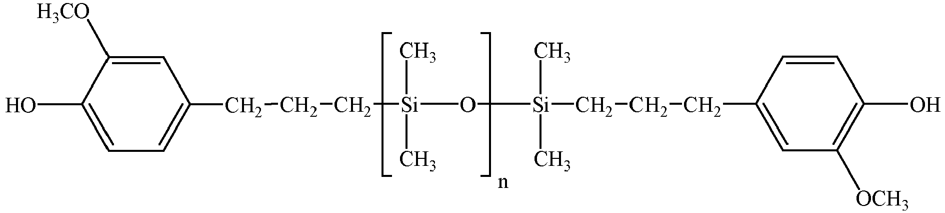 wherein n is, on average, 5 to 100, or 30 to 60.

The oxidative copolymerization method produces poly(phenylene ether)-polysiloxane block copolymer as the desired product and poly(phenylene ether) (without an incorporated polysiloxane block) as a by-product. It is not necessary to separate the poly(phenylene ether) from the poly(phenylene ether)-polysiloxane block copolymer. The poly(phenylene ether)-polysiloxane block copolymer can thus be utilized as a "reaction product" that includes both the poly(phenylene ether) and the poly(phenylene ether)-polysiloxane block copolymer. Certain isolation procedures, such as precipitation from isopropanol, make it possible to assure that the reaction product is essentially free of residual hydroxyaryl-terminated polysiloxane starting material. In other words, these isolation procedures assure that the polysiloxane content of the reaction product is essentially all in the form of poly(phenylene ether)-polysiloxane block copolymer. Detailed methods for forming poly(phenylene ether)-polysiloxane block copolymer reaction products are described in U.S. Patent Nos. 8,017,697 B2 and 8,669,332 B2 to Carrillo et al. Poly(phenylene ether)-polysiloxane block copolymer reaction products are also commercially available as, for example, PPO 843 from SABIC.

In some embodiments, the poly(phenylene ether)-polysiloxane block copolymer reaction product has an intrinsic viscosity of 0.3 to 0.5 deciliter per gram, determined at 25 °C in chloroform by Ubbelohde viscometer. Within this range, the intrinsic viscosity can be 0.35 to 0.45 deciliter per gram.

In some embodiments, the first poly(phenylene ether) and the second poly(phenylene ether) and the poly(phenylene ether) block of the poly(phenylene ether)-polysiloxane block copolymer each independently comprise repeat units having the formula 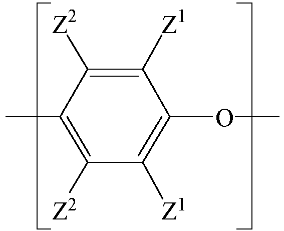 wherein each occurrence of Z¹ is independently halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each occurrence of Z² is independently hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and the polysiloxane block of the poly(phenylene ether)-polysiloxane block copolymer comprises repeat units having the formula 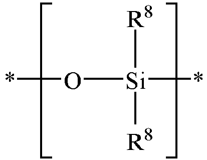 wherein each occurrence of R⁸ is independently C₁-C₁₂ hydrocarbyl.

In some embodiments, the second poly(phenylene ether) comprises poly(2,6-dimethyl-1,4-phenylene ether); and, in the poly(phenylene ether)-polysiloxane block copolymer, the poly(phenylene ether) block comprises 2,6-dimethyl-1,4-phenylene ether units, and the polysiloxane block has the structure 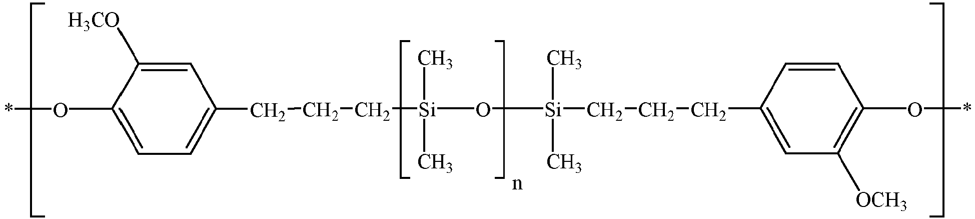 wherein n is 30 to 60.

The composition comprises the poly(phenylene ether)-polysiloxane block copolymer reaction product in an amount of 3 to 17 weight percent, based on the total weight of the composition. Within this range, the amount of poly(phenylene ether)-polysiloxane block copolymer reaction product can be 4 to 15 weight percent, or 4 to 12 weight percent.

In addition to the first poly(phenylene ether) and the poly(phenylene ether)-polysiloxane block copolymer reaction product, the composition comprises a hydrogenated block copolymer of an alkenyl aromatic compound and a conjugated diene. For brevity, this component is referred to as the "hydrogenated block copolymer". The hydrogenated block copolymer may comprise about 10 to about 90 weight percent of poly(alkenyl aromatic) content and about 90 to about 10 weight percent of hydrogenated poly(conjugated diene) content, based on the weight of the hydrogenated block copolymer. In some embodiments, the poly(alkenyl aromatic) content is about 10 to about 45 weight percent, or about 20 to about 40 weight percent, or about 25 to about 35 weight percent. In other embodiments, the poly(alkenyl aromatic) content is about 45 weight percent to about 90 weight percent, or about 45 to about 80 weight percent. The hydrogenated block copolymer can have a weight average molecular weight of about 40,000 to about 400,000 atomic mass units. The number average molecular weight and the weight average molecular weight may be determined by gel permeation chromatography and based on comparison to polystyrene standards. In some embodiments, the hydrogenated block copolymer has a weight average molecular weight of about 200,000 to about 400,000 atomic mass units, or about 220,000 to about 350,000 atomic mass units. In other embodiments, the hydrogenated block copolymer can have a weight average molecular weight of about 40,000 to about 200,000 atomic mass units, or about 40,000 to about 180,000 atomic mass units, or about 40,000 to about 150,000 atomic mass units.

The alkenyl aromatic monomer used to prepare the hydrogenated block copolymer can have the structure 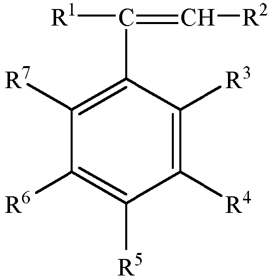 wherein R¹ and R² each independently represent a hydrogen atom, a C₁-C₈ alkyl group, or a C₂-C₈ alkenyl group; R³ and R⁷ each independently represent a hydrogen atom, a C₁-C₈ alkyl group, a chlorine atom, or a bromine atom; and R⁴, R⁵, and R⁶ each independently represent a hydrogen atom, a C₁-C₈ alkyl group, or a C₂-C₈ alkenyl group, or R⁴ and R⁵ are taken together with the central aromatic ring to form a naphthyl group, or R⁵ and R⁶ are taken together with the central aromatic ring to form a naphthyl group. Specific alkenyl aromatic monomers include, for example, styrene, chlorostyrenes such as p-chlorostyrene, and methylstyrenes such as alpha-methylstyrene and p-methylstyrene. In some embodiments, the alkenyl aromatic monomer is styrene.

The conjugated diene used to prepare the hydrogenated block copolymer can be a C₄-C₂₀ conjugated diene. Suitable conjugated dienes include, for example, 1,3-butadiene, 2-methyl-1,3-butadiene, 2-chloro-1,3-butadiene, 2,3-dimethyl-1,3-butadiene, 1,3-pentadiene, 1,3-hexadiene, and the like, and combinations thereof. In some embodiments, the conjugated diene is 1,3-butadiene, 2-methyl-1,3-butadiene, or a combination thereof. In some embodiments, the conjugated diene consists of 1,3-butadiene.

The hydrogenated block copolymer is a copolymer comprising (A) at least one block derived from an alkenyl aromatic compound and (B) at least one block derived from a conjugated diene, in which the aliphatic unsaturated group content in the block (B) is at least partially reduced by hydrogenation. In some embodiments, the aliphatic unsaturation in the (B) block is reduced by at least 50 percent, or at least 70 percent. The arrangement of blocks (A) and (B) includes a linear structure, a grafted structure, and a radial teleblock structure with or without a branched chain. Linear block copolymers include tapered linear structures and non-tapered linear structures. In some embodiments, the hydrogenated block copolymer has a tapered linear structure. In some embodiments, the hydrogenated block copolymer has a non-tapered linear structure. In some embodiments, the hydrogenated block copolymer comprises a B block that comprises random incorporation of alkenyl aromatic monomer. Linear block copolymer structures include diblock (A-B block), triblock (A-B-A block or B-A-B block), tetrablock (A-B-A-B block), and pentablock (A-B-A-B-A block or B-A-B-A-B block) structures as well as linear structures containing 6 or more blocks in total of A and B, wherein the molecular weight of each A block may be the same as or different from that of other A blocks, and the molecular weight of each B block may be the same as or different from that of other B blocks. In some embodiments, the hydrogenated block copolymer is a diblock copolymer, a triblock copolymer, or a combination thereof.

In some embodiments, the hydrogenated block copolymer excludes the residue of monomers other than the alkenyl aromatic compound and the conjugated diene.

In some embodiments, the hydrogenated block copolymer comprises a polystyrene-poly(ethylene-butylene)-polystyrene triblock copolymer. In some embodiments, the hydrogenated block copolymer comprises a polystyrene-poly(ethylene-butylene)-polystyrene triblock copolymer having a weight average molecular weight of about 200,000 to about 400,000 atomic mass units, or about 240,000 to about 350,000 atomic mass units, or about 240,000 to about 300,000 atomic mass units.

Methods for preparing hydrogenated block copolymers are known in the art and many hydrogenated block copolymers are commercially available. Illustrative commercially available hydrogenated block copolymers include the polystyrene-poly(ethylene-propylene) diblock copolymers available from Kraton Polymers as KRATON G1701 and G1702; the polystyrene-poly(ethylene-butylene)-polystyrene triblock copolymers available from Kraton Polymers as KRATON G1641, G1650, G1651, G1654, G1657, G1726, G4609, G4610, GRP-6598, RP-6924, MD-6932M, MD-6933, and MD-6939; the polystyrene-poly(ethylenebutylene-styrene)-polystyrene (S-EB/S-S) triblock copolymers available from Kraton Polymers as KRATON RP-6935 and RP-6936, the polystyrene-poly(ethylene-propylene)-polystyrene triblock copolymers available from Kraton Polymers as KRATON G1730; the maleic anhydride-grafted polystyrene-poly(ethylene-butylene)-polystyrene triblock copolymers available from Kraton Polymers as KRATON G1901, G1924, and MD-6684; the maleic anhydride-grafted polystyrene-poly(ethylene-butylene-styrene)-polystyrene triblock copolymer available from Kraton Polymers as KRATON MD-6670; the polystyrene-poly(ethylene-butylene)-polystyrene triblock copolymer comprising 67 weight percent polystyrene available from Asahi Kasei Elastomer as TUFTEC H1043; the polystyrene-poly(ethylene-butylene)-polystyrene triblock copolymer comprising 42 weight percent polystyrene available from Asahi Kasei Elastomer as TUFTEC H1051; the polystyrene-poly(butadiene-butylene)-polystyrene triblock copolymers available from Asahi Kasei Elastomer as TUFTEC P1000 and P2000; the polystyrene-polybutadiene-poly(styrene-butadiene)-polystyrene block copolymer available from Asahi Kasei Elastomer as S.O.E.-SS L601; the polystyrene-poly(ethylene-butylene)-polystyrene triblock copolymer comprising 60 weight polystyrene available from Kuraray as SEPTON S8104; the polystyrene-poly(ethylene-ethylene/propylene)-polystyrene triblock copolymers available from Kuraray as SEPTON S4044, S4055, S4077, and S4099; and the polystyrene-poly(ethylenepropylene)-polystyrene triblock copolymer comprising 65 weight percent polystyrene available from Kuraray as SEPTON S2104. Mixtures of two of more hydrogenated block copolymers can be used.

The composition comprises 3 to 10 weight percent of the hydrogenated block copolymer, based on the total weight of the composition. Within this range, the amount of hydrogenated block copolymer can be 4 to 9 weight percent, or 4 to 7 weight percent.

In addition to the first poly(phenylene ether), the poly(phenylene ether)-polysiloxane block copolymer reaction product, and the hydrogenated block copolymer, the composition comprises an organophosphate flame retardant. Exemplary organophosphate ester flame retardants include phosphate esters comprising phenyl groups, substituted phenyl groups, or a combination of phenyl groups and substituted phenyl groups, bis-aryl phosphate esters based upon resorcinol such as, for example, resorcinol bis(diphenyl phosphate), as well as those based upon bisphenols such as, for example, bisphenol A bis(diphenyl phosphate). In some embodiments, the organophosphate flame retardant is selected from the group consisting of triphenyl phosphate (CAS Reg. No. 115-86-6), tris(alkylphenyl) phosphates (including, for example, tris(para-tert-butylphenyl) phosphate (CAS Reg. No. 78-33-1), isopropylated triphenyl phosphate (CAS Reg. No. 68937-41-7), and tert-butylphenyl diphenyl phosphate (CAS Reg. No. 89492-23-9)), hydroquinone bis(diphenyl phosphate) (CAS Reg. No. 51732-57-1), resorcinol bis(diphenyl phosphate) (CAS Reg. No. 57583-54-7), bisphenol A bis(diphenyl phosphate) (CAS Reg. No. 181028-79-5), tetrakis(2,6-dimethylphenyl) 1,3-phenylene bisphosphate (CAS Reg. No. 139189-30-3), and combinations thereof. In some embodiments, the organophosphate flame retardant comprises bisphenol A bis(diphenyl phosphate).

The composition minimizes or excludes reinforcing fillers. Specifically, the composition includes 0 to 2 weight percent of reinforcing fillers, based on the total composition. The amount of reinforcing filler can be 0 to 2 weight percent, or 0 to 1 weight percent, or the composition can entirely exclude reinforcing filler. In this context, reinforcing fillers include, for example, glass fibers, carbon fibers, wollastonite, halloysite, clays, talcs, micas, glass flakes, solid glass beads, hollow glass beads, solid ceramic beads, hollow ceramic beads, and combinations thereof. The addition of substantial amounts of reinforcing fillers to the composition would compromise impact strength and flame retardancy, and it would also detract from the desirable isotropy of properties including mold shrinkage.

The composition minimizes or excludes adhesion promoters selected from the group consisting of (a) phenolic compounds having a molecular weight of 94 to 18,000 daltons (i.e., grams/mole); (b) hydroxysilyl-terminated polydiorganosiloxanes of the formula 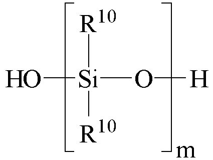 wherein m is 2 to 50, and each occurrence of R¹⁰ is independently C₁-C₁₂ hydrocarbyl, provided that 5 to 60 mole percent of the occurrences of R¹⁰ are independently C₆-C₁₂ aryl; and (c) combinations of the (a) phenolic compounds and the (b) hydroxysilyl-terminated polydiorganosiloxanes. Such adhesion promoters are described, for example, in International Patent Application Publication No. WO 2016/174534 A1 of Zhang et al. The composition comprises 0 to 1 weight percent of such adhesion promoters. Within this range, the amount of such adhesion promoters can be 0 to 0.5 weight percent, or the composition can entirely exclude the adhesion promoters. The phenolic compounds are undesirable because of their limited miscibility with the other components of the composition. The hydroxysilyl-terminated polydiorganosiloxanes would make the composition prohibitively expensive for its intended uses.

The composition minimizes or excludes addition polymers comprising repeat units derived from a glycidyl ester of an α,β-ethylenically unsaturated acid. The addition polymers, which are described in International Patent Application Publication No. WO 2016/187791 A1 of Zhang et al., can include, for example, 60 to 99 weight percent repeat units derived from alpha-olefin, 0.1 to 20 weight percent repeat units derived from a glycidyl ester of an α,β-ethylenically unsaturated acid, and 0 to 39 weight percent of repeat units derived from a vinyl ester and/or a C₁-C₁₂ alkyl (meth)acrylate. In some embodiments, the addition polymer is a poly(ethylene-co-glycidyl methacrylate), a poly(ethylene-co-methyl acrylate-co-glycidyl methacrylate), or a combination thereof. The composition comprises 0 to 0.5 weight percent of the addition polymer, based on the total weight of the composition. Within this range, the amount of addition polymer can be 0 to 0.25 weight percent, or the composition can entirely exclude the addition polymer. The addition polymer is undesirable because of its limited miscibility with the other components of the composition, as well as its deleterious effect on flame retardancy.

The composition can, optionally, further comprise one or more additives known in the thermoplastics art. For example, the composition can, optionally, further comprise an additive selected from the group consisting of stabilizers, mold release agents, lubricants, processing aids, drip retardants, UV blockers, colorants (including dyes and pigments), antioxidants, anti-static agents, metal deactivators, antiblocking agents, and combinations thereof. When present, such additives are typically used in a total amount of less than or equal to 10 weight percent, or less than or equal to 5 weight percent, or less than or equal to 3 weight percent, based on the total weight of the composition.

In some embodiments, the composition excludes the reinforcing filler, the adhesion promoter, and the addition polymer. In some embodiments, the amounts of the first poly(phenylene ether), the poly(phenylene ether)-polysiloxane block copolymer reaction product, the hydrogenated block copolymer, the organophosphate flame retardant, and the optional additives sum to 95 to 100 weight percent, or 97 to 100 weight percent, or 98 to 100 weight percent, or 99 to 100 weight percent.

In a very specific embodiment of the composition, the first poly(phenylene ether) comprises poly(2,6-dimethyl-1,4-phenylene ether) having an intrinsic viscosity of 0.4 to 0.5 deciliter per gram, determined at 25 °C in chloroform by Ubbelohde viscometer; the second poly(phenylene ether) comprises poly(2,6-dimethyl-1,4-phenylene ether); and, in the poly(phenylene ether)-polysiloxane block copolymer, the poly(phenylene ether) block comprises 2,6-dimethyl-1,4-phenylene ether units, and the polysiloxane block has the structure 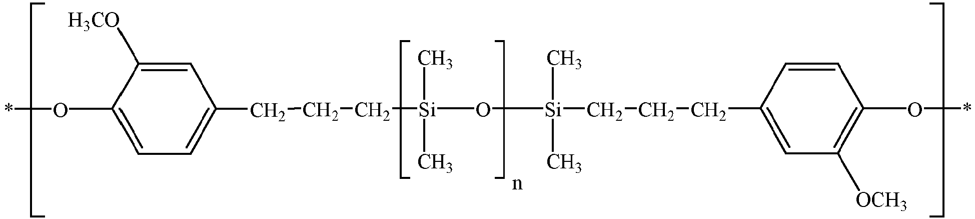 wherein n is 30 to 60; the hydrogenated block copolymer comprises a polystyrene-poly(ethylenebutylene)-polystyrene triblock copolymer; and the organophosphate flame retardant comprises bisphenol A bis(diphenyl phosphate).

In another very specific embodiment of the composition, the composition comprises 70 to 86 weight percent of the first poly(phenylene ether), 4 to 12 weight percent of the poly(phenylene ether)-polysiloxane block copolymer reaction product, 4 to 7 weight percent of the hydrogenated block copolymer, and 6 to 11 weight percent of the organophosphate flame retardant; the first poly(phenylene ether) comprises poly(2,6-dimethyl-1,4-phenylene ether) having an intrinsic viscosity of 0.4 to 0.5 deciliter per gram, determined at 25 °C in chloroform by Ubbelohde viscometer; the second poly(phenylene ether) comprises poly(2,6-dimethyl-1,4-phenylene ether); and, in the poly(phenylene ether)-polysiloxane block copolymer, the poly(phenylene ether) block comprises 2,6-dimethyl-1,4-phenylene ether units, and the polysiloxane block has the structure 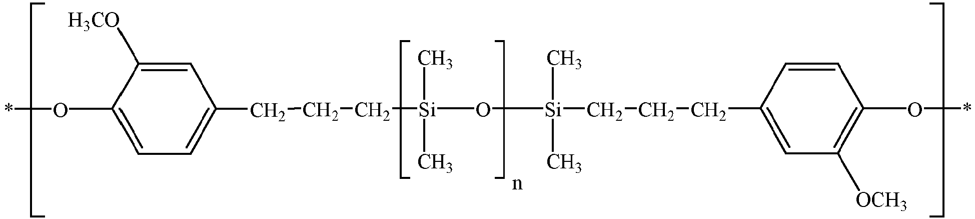 wherein n is 30 to 60; the hydrogenated block copolymer comprises a polystyrene-poly(ethylenebutylene)-polystyrene triblock copolymer; and the organophosphate flame retardant comprises bisphenol A bis(diphenyl phosphate).

Another embodiment is an article comprising the composition in any of its above-described variations. Suitable article-forming methods include, for example, injection molding, sheet extrusion, profile extrusion, blow molding, compression molding, pressure forming, and foaming. Articles for which the composition is especially suitable include electrical enclosures, battery enclosures, and electrical connectors. In some embodiments, the article is an electrical enclosure.

In a very specific embodiment of the article, the first poly(phenylene ether) comprises poly(2,6-dimethyl-1,4-phenylene ether) having an intrinsic viscosity of 0.4 to 0.5 deciliter per gram, determined at 25 °C in chloroform by Ubbelohde viscometer; the second poly(phenylene ether) comprises poly(2,6-dimethyl-1,4-phenylene ether); and, in the poly(phenylene ether)-polysiloxane block copolymer, the poly(phenylene ether) block comprises 2,6-dimethyl-1,4-phenylene ether units, and the polysiloxane block has the structure 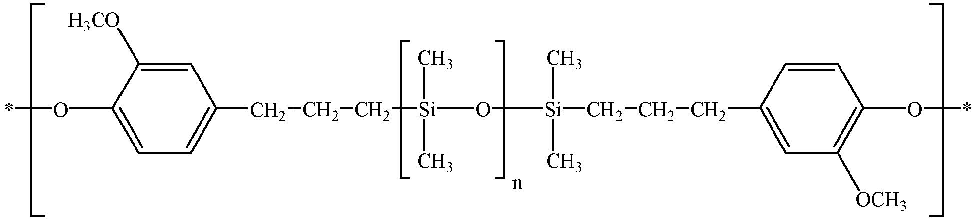 wherein n is 30 to 60; the hydrogenated block copolymer comprises a polystyrene-poly(ethylenebutylene)-polystyrene triblock copolymer; and the organophosphate flame retardant comprises bisphenol A bis(diphenyl phosphate).

In another very specific embodiment of the article, the composition comprises 70 to 86 weight percent of the first poly(phenylene ether), 4 to 12 weight percent of the poly(phenylene ether)-polysiloxane block copolymer reaction product, 4 to 7 weight percent of the hydrogenated block copolymer, and 6 to 11 weight percent of an organophosphate flame retardant; the first poly(phenylene ether) comprises poly(2,6-dimethyl-1,4-phenylene ether) having an intrinsic viscosity of 0.4 to 0.5 deciliter per gram, determined at 25 °C in chloroform by Ubbelohde viscometer; the second poly(phenylene ether) comprises poly(2,6-dimethyl-1,4-phenylene ether); and, in the poly(phenylene ether)-polysiloxane block copolymer, the poly(phenylene ether) block comprises 2,6-dimethyl-1,4-phenylene ether units, and the polysiloxane block has the structure 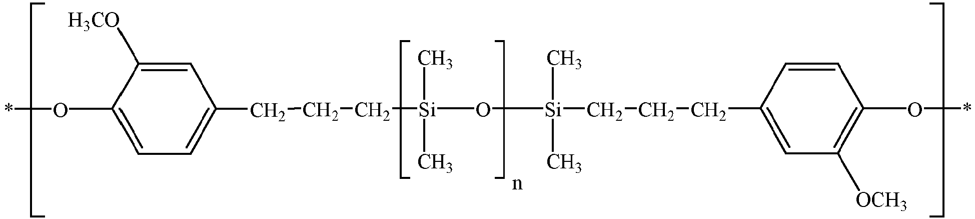 wherein n is 30 to 60; the hydrogenated block copolymer comprises a polystyrene-poly(ethylenebutylene)-polystyrene triblock copolymer; and the organophosphate flame retardant comprises bisphenol A bis(diphenyl phosphate).

All ranges disclosed herein are inclusive of the endpoints, and the endpoints are independently combinable with each other. Each range disclosed herein constitutes a disclosure of any point or sub-range lying within the disclosed range.

The invention is further illustrated by the following non-limiting examples.

### EXAMPLES

Materials used to form melt-blended compositions are summarized in Table 1.

**Table 1**

| Material | Description |
|---|---|
| PPE | Poly(2,6-dimethyl-1,4-phenylene ether), CAS Reg. No. 25134-01-4, having an intrinsic viscosity of 0.46 deciliter/gram, determined at 25 °C in chloroform by Ubbelohde viscometer. |
| PPE-Si | Poly(2,6-dimethyl-1,4-phenylene ether)-polydimethylsiloxane block copolymer reaction product, the reaction product containing a mixture of poly(2,6-dimethyl-1,4-phenylene ether), CAS Reg. No. 25134-01-4, and poly(2,6-dimethyl-1,4-phenylene ether)-polydimethylsiloxane block copolymer, CAS Reg. No. 1202019-56-4; the reaction product having a polydimethylsiloxane content of about 5 weight percent based on the total weight of the reaction product, and an intrinsic viscosity of 0.40 deciliter/gram, determined at 25 °C in chloroform by Ubbelohde viscometer; preparable according to the procedure of U.S. Patent No. 8,017,697 to Carrillo et al., Example 16. |
| SEBS | Polystyrene-poly(ethylene-butylene)-polystyrene triblock copolymer, CAS Reg. No. 66070-58-4, having a polystyrene content of 30-33 weight percent. |
| BPADP | Bisphenol A bis(diphenyl phosphate), CAS Reg. No. 181028-79-5. |
| Phosphazene | Hexaphenoxycyclotriphosphazene, CAS Reg. No. 1184-10-7. |
| DEPAL | Aluminum tris(diethylphosphinate), CAS Reg. No. 225789-38-8, having a D95 particle size less than or equal to 10 micrometers determined by laser diffraction in acetone; obtained as EXOLIT^{™} OP 935 from Clariant. |
| Additives | One or more of acid scavengers, metal deactivators, stabilizers, and mold release agents. |

Compositions are summarized in Table 2, where component amounts are expressed in units of weight percent based on the total weight of the composition. Formulations were compounded on a Toshiba TEM-37BS extruder at 30 kilograms/hour and 300 rotations/minute using set temperatures of 50-150-280-280-270-280-280-290-290-290-290 °C from the feed port to the die. BPADP was added through a liquid feeder and other components were added through the throat feeder. The compounded resin was pelletized by strand cutting. Pellets were dried for 3 hours at 80 °C before use for injection molding. Dried pellets were injection molded into test specimens for physical property testing and flame testing. Injection molding was conducted on a FANUC ROBOSHOT S-2000i100A molding machine (for impact strength and heat deflection temperature test articles) or a NETSTAL SYNERGY 1500K molding machine (for flame bars), each operating at barrel temperatures of 300 °C and a mold temperature of 85 °C.

In Table 2, "HDT at 1.82 MPa, 3.2 mm (°C)" refers to heat deflection temperature determined according to ASTM D648-18 at 1.82 megapascals, with values expressed in units of degrees centigrade and representing the average of three values per composition.

"First FOT (sec)" and "Second FOT (sec)" refer to first and second flame out times, respectively, each having units of seconds, and each determined according to Underwriter's Laboratory Bulletin 94 "Tests for Flammability of Plastic Materials, UL 94", 20 mm Vertical Burning Flame Test, using samples having a thickness of 1.5 millimeters. For each sample, a flame was applied to the sample then removed, and the time required for the bar to self-extinguish (first flame out time) was noted. The flame was then reapplied and removed, and the time required for the bar to self-extinguish (second flame out time) was noted. Reported values represent the average of twenty samples per composition.

"MFR at 300 °C, 5 kg (g/10 min)" refers to the melt flow rate, expressed in units of grams per 10 minutes, determined at 300 °C and 5 kilogram load according to ASTM D1238-20.

"Notched Izod, 23 °C (J/m)" and "Notched Izod, -30 °C (J/m)" refer to notched Izod impact strength values determined at 23 °C and -30 °C, respectively, each expressed in units of joules per meter and determined according to ASTM D256-10(2018). Reported values represent the average of five samples per composition.

The property results in Table 2 illustrate the effects of adding a relatively small amount of poly(phenylene ether)-polysiloxane to a poly(phenylene ether)-based composition containing an impact modifier and an organophosphate flame retardant. Comparative Example 1 with poly(phenylene ether) but no poly(phenylene ether)-polysiloxane exhibits a high heat distortion temperature (134 °C), but high first and second flame out times (2.2 and 5.1 seconds, respectively). In contrast, Example 1 with both poly(phenylene ether) and poly(phenylene ether)-polysiloxane exhibits a comparable heat distortion temperature (135 °C) but lower first and second flame out times (1.3 and 1.6 seconds, respectively). Relative to Comparative Example 1, Example 1 also exhibits higher notched Izod impact strengths at 23 and -30 °C.

**Table 2**

| | Ex. 1 | C. Ex. 1 |
|---|---|---|
| COMPOSITIONS | | |
| PPE | 72.7 | 82.7 |
| PPE-Si | 10.0 | 0 |
| SEBS | 5.4 | 5.4 |
| BPADP | 9.5 | 9.5 |
| Additives | 2.4 | 2.4 |

| PROPERTIES | | |
|---|---|---|
| HDT at 1.82 MPa, 3.2 mm (°C) | 134 | 135 |
| First FOT (sec) | 1.3 | 2.2 |
| Second FOT (sec) | 1.6 | 5.1 |
| MFR at 300 °C, 5 kg (g/10 min) | 12.2 | 11.4 |
| Notched Izod, 23 °C (J/m) | 190 | 175 |
| Notched Izod, -30 °C (J/m) | 71 | 66 |

The property results in Table 3 further illustrate the effects of adding poly(phenylene ether)-polysiloxane and also illustrate the effects of reducing the content of organophosphate flame retardant (BPADP), with or without adding a small amount of a supplemental solid state flame retardant. In order to increase heat distortion temperature relative to Comparative Example 1, Comparative Examples 2-4, each of which includes no poly(phenylene ether)-polysiloxane, use either lower BPADP content (Comparative Example 3), or a combination of lower BPADP content and small amount of the solid state flame retardants hexaphenoxycyclotriphosphazene (Comparative Example 4) or aluminum tris(diethylphosphinate) (Comparative Example 2). Relative to Comparative Example 1, Comparative Examples 2-4 each achieved higher heat distortion temperatures of 145, 141, and 141 °C, respectively, but their first flame out times of 4.4, 3.2, and 2.8 seconds, respectively, as well as their second flame out times of 6.0, 6.3, and 5.5 seconds, respectively, were all higher than the respective flame out times of Comparative Example 1. In contrast, Examples 2 and 3, each including poly(phenylene ether)-polysiloxane but a reduced BPADP amount relative to Example 1, exhibited heat distortion temperature values of 144 and 139 °C, respectively (i.e., values comparative to those of Comparative Examples 2-4) and also exhibited much lower first flame out times (1.6 and 1.5 seconds, respectively) and second flame out times (2.3 and 1.9 seconds, respectively) than Comparative Examples 2-4. At 23 °C, the notched Izod impact strength for Example 2 (173 joules/meter) was lower than the range for Comparative Examples 2-4 (189-229 joules/meter), but the value for Example 3 was comparable (195 joules/meter). At -30 °C, the notched Izod impact strength range for Example 3 (65.6 joules/meter) was lower than the range for Comparative Examples 2-4 (70.5-77.5 joules/meter), but the value for Example 2 (78.7 joules/meter) was comparable, if not superior.

**Table 3**

| | Ex. 2 | Ex. 3 | C. Ex. 2 | C. Ex. 3 | C. Ex. 4 |
|---|---|---|---|---|---|
| COMPOSITIONS | | | | | |
| PPE | 75.0 | 74.1 | 84.6 | 84.2 | 83.4 |
| PPE-Si | 10.0 | 10.0 | 0 | 0 | 0 |
| SEBS | 5.6 | 5.5 | 5.6 | 5.6 | 5.5 |
| BPADP | 7.0 | 8.0 | 6.2 | 7.9 | 7.3 |
| Phosphazene | 0 | 0 | 0 | 0 | 1.5 |
| DEPAL | 0 | 0 | 1.2 | 0 | 0 |
| Additives | 2.4 | 2.4 | 2.4 | 2.4 | 2.4 |

| PROPERTIES | | | | | |
|---|---|---|---|---|---|
| HDT at 1.82 MPa, 3.2 mm (°C) | 144 | 139 | 145 | 141 | 141 |
| First FOT (sec) | 1.6 | 1.5 | 4.4 | 3.2 | 2.8 |
| Second FOT (sec) | 2.3 | 1.9 | 6.0 | 6.3 | 5.5 |
| MFR at 300 °C, 5 kg (g/10 min) | 8.3 | 10.3 | 8.7 | 8.3 | 10.8 |
| Notched Izod, 23 °C (J/m) | 173 | 195 | 189 | 229 | 221 |
| Notched Izod, -30 °C (J/m) | 78.7 | 65.6 | 77.5 | 70.5 | 74.1 |

The property results in Table 4 illustrate the effects of poly(phenylene ether)-polysiloxane content. Comparative Examples 5-7 show that amounts of poly(phenylene ether)-polysiloxane reaction product greater than 17 weight percent are associated with substantial reductions in heat distortion temperature relative to Examples 1-4 with 10 weight percent (Examples 1-3) or 5 weight percent (Example 4) poly(phenylene ether)-polysiloxane reaction product. First and second flame out times are relatively low for all samples. Not unexpectedly, Comparative Examples 5-7 with high concentrations of poly(phenylene ether)-polysiloxane generally exhibit greater impact strengths than those for Examples 1-4 with much lower concentrations of poly(phenylene ether)-polysiloxane, but their low heat distortion temperatures render them unfit for many applications.

**Table 4**

| | Ex. 1 | Ex. 2 | Ex. 3 | Ex. 4 | C. Ex. 5 |
|---|---|---|---|---|---|
| COMPOSITIONS | | | | | |
| PPE | 72.7 | 75.0 | 74.1 | 79.1 | 62.7 |
| PPE-Si | 10.0 | 10.0 | 10.0 | 5.0 | 20.0 |
| SEBS | 5.4 | 5.6 | 5.5 | 5.5 | 5.4 |
| BPADP | 9.5 | 7.0 | 8.0 | 8.0 | 9.5 |
| Additives | 2.4 | 2.4 | 2.4 | 2.4 | 2.4 |

| PROPERTIES | | | | | |
|---|---|---|---|---|---|
| HDT at 1.82 MPa, 3.2 mm (°C) | 134 | 144 | 139 | 139 | 132 |
| First FOT (sec) | 1.3 | 1.6 | 1.5 | 1.7 | 1.2 |
| Second FOT (sec) | 1.6 | 2.3 | 1.9 | 2.2 | 2.1 |
| MFR at 300 °C, 5 kg (g/10 min) | 12.2 | 8.3 | 10.3 | 10.4 | 12.3 |
| Notched Izod, 23 °C (J/m) | 190 | 173 | 195 | 181 | 231 |
| Notched Izod, -30 °C (J/m) | 71.0 | 78.7 | 65.6 | 65.1 | 69.0 |

**Table 4 cont.**

| | C. Ex. 6 | C. Ex. 7 |
|---|---|---|
| COMPOSITIONS | | |
| PPE | 42.7 | 0 |
| PPE-Si | 40.0 | 82.7 |
| SEBS | 5.4 | 5.4 |
| BPADP | 9.5 | 9.5 |
| Additives | 2.4 | 2.4 |

| PROPERTIES | | |
|---|---|---|
| HDT at 1.82 MPa, 3.2 mm (°C) | 132 | 127 |
| First FOT (sec) | 1.3 | 1.3 |
| Second FOT (sec) | 2.6 | 3.8 |
| MFR at 300 °C, 5 kg (g/10 min) | 12.8 | 12.2 |
| Notched Izod, 23 °C (J/m) | 293 | 361 |
| Notched Izod, -30 °C (J/m) | 86.1 | 99.3 |

The experimental examples above collectively illustrate that for poly(phenylene ether) based compositions containing a hydrogenated block copolymer, a combination of high heat distortion temperature and low flammability is achieved using specific amounts of a poly(phenylene ether)-polysiloxane reaction product and an organophosphate flame retardant.

## Claims

1. A composition comprising, based on the total weight of the composition:
55.5 to 90 weight percent of a first poly(phenylene ether);
3 to 17 weight percent of a poly(phenylene ether)-polysiloxane block copolymer reaction product comprising
a second poly(phenylene ether), and
a poly(phenylene ether)-polysiloxane block copolymer comprising
a poly(phenylene ether) block, and
a polysiloxane block comprising, on average, 20 to 80 siloxane repeat units;
wherein the poly(phenylene ether)-polysiloxane block copolymer reaction product comprises 1 to 30 weight percent siloxane repeat units and 70 to 99 weight percent phenylene ether repeat units, based on the total weight of the poly(phenylene ether)-polysiloxane block copolymer reaction product;
3 to 10 weight percent of a hydrogenated block copolymer of an alkenyl aromatic compound and a conjugated diene;
4 to 13 weight percent of an organophosphate flame retardant;
0 to 2 weight percent of a reinforcing filler;
0 to 1 weight percent of an adhesion promoter selected from the group consisting of (a) phenolic compounds having a molecular weight of 94 to 18,000 g/mol, measured as defined in the specification; (b) hydroxysilyl-terminated polydiorganosiloxanes of the formula 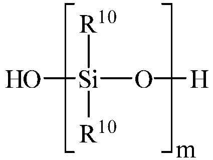 wherein m is 2 to 50, and each occurrence of R¹⁰ is independently C₁-C₁₂ hydrocarbyl, provided that 5 to 60 mole percent of the occurrences of R¹⁰ are independently C₆-C₁₂ aryl; and (c) combinations of the (a) phenolic compounds and the (b) hydroxysilyl-terminated polydiorganosiloxanes; and
0 to 0.5 weight percent of an addition polymer comprising repeat units derived from a glycidyl ester of an α,β-ethylenically unsaturated acid.

2. The composition of claim 1, wherein
the first poly(phenylene ether) and the second poly(phenylene ether) and the poly(phenylene ether) block of the poly(phenylene ether)-polysiloxane block copolymer each independently comprise repeat units having the formula 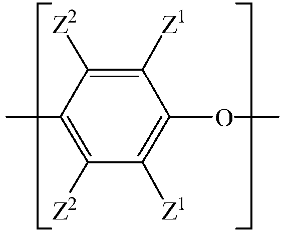 wherein each occurrence of Z¹ is independently halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each occurrence of Z² is independently hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and
the polysiloxane block of the poly(phenylene ether)-polysiloxane block copolymer comprises repeat units having the formula 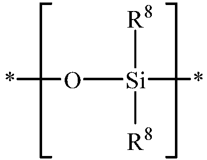 wherein each occurrence of R⁸ is independently C₁-C₁₂ hydrocarbyl or C₁-C₁₂ halohydrocarbyl.

3. The composition of claim 1 or 2, wherein the first poly(phenylene ether) comprises poly(2,6-dimethyl-1,4-phenylene ether) having an intrinsic viscosity of 0.4 to 0.5 deciliter per gram, determined at 25 °C in chloroform by Ubbelohde viscometer.

4. The composition of any one of claims 1-3, wherein the second poly(phenylene ether) comprises poly(2,6-dimethyl-1,4-phenylene ether); and wherein, in the poly(phenylene ether)-polysiloxane block copolymer, the poly(phenylene ether) block comprises 2,6-dimethyl-1,4-phenylene ether units, and the polysiloxane block has the structure 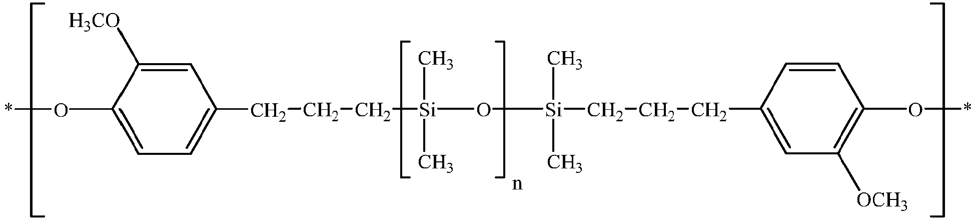 wherein n is 30 to 60.

5. The composition of any one of claims 1-4, wherein the hydrogenated block copolymer comprises a polystyrene-poly(ethylene-butylene)-polystyrene triblock copolymer.

6. The composition of any one of claims 1-5, wherein the organophosphate flame retardant is selected from the group consisting of triphenyl phosphate, tris(alkylphenyl) phosphates, hydroquinone bis(diphenyl phosphate), resorcinol bis(diphenyl phosphate), bisphenol A bis(diphenyl phosphate), tetrakis(2,6-dimethylphenyl) 1,3-phenylene bisphosphate, and combinations thereof.

7. The composition of any one of claims 1-5, wherein the organophosphate flame retardant comprises bisphenol A bis(diphenyl phosphate).

8. The composition of claim 1, wherein
the first poly(phenylene ether) comprises poly(2,6-dimethyl-1,4-phenylene ether) having an intrinsic viscosity of 0.4 to 0.5 deciliter per gram, determined at 25 °C in chloroform by Ubbelohde viscometer;
the second poly(phenylene ether) comprises poly(2,6-dimethyl-1,4-phenylene ether); and, in the poly(phenylene ether)-polysiloxane block copolymer, the poly(phenylene ether) block comprises 2,6-dimethyl-1,4-phenylene ether units, and the polysiloxane block has the structure 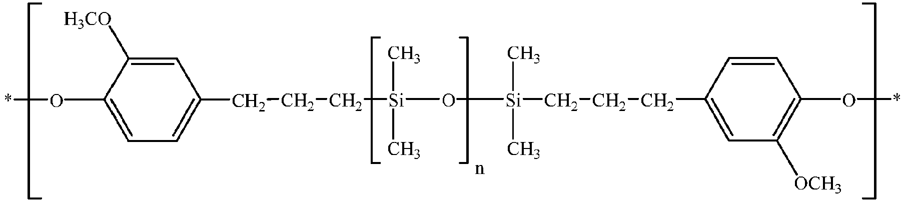 wherein n is 30 to 60;
the hydrogenated block copolymer comprises a polystyrene-poly(ethylene-butylene)-polystyrene triblock copolymer; and
the organophosphate flame retardant comprises bisphenol A bis(diphenyl phosphate).

9. The composition of claim 1, wherein
the composition comprises
70 to 86 weight percent of the first poly(phenylene ether),
4 to 12 weight percent of the poly(phenylene ether)-polysiloxane block copolymer reaction product,
4 to 7 weight percent of the hydrogenated block copolymer, and
6 to 11 weight percent of the organophosphate flame retardant;
the first poly(phenylene ether) comprises poly(2,6-dimethyl-1,4-phenylene ether) having an intrinsic viscosity of 0.4 to 0.5 deciliter per gram, determined at 25 °C in chloroform by Ubbelohde viscometer;
the second poly(phenylene ether) comprises poly(2,6-dimethyl-1,4-phenylene ether); and, in the poly(phenylene ether)-polysiloxane block copolymer, the poly(phenylene ether) block comprises 2,6-dimethyl-1,4-phenylene ether units, and the polysiloxane block has the structure 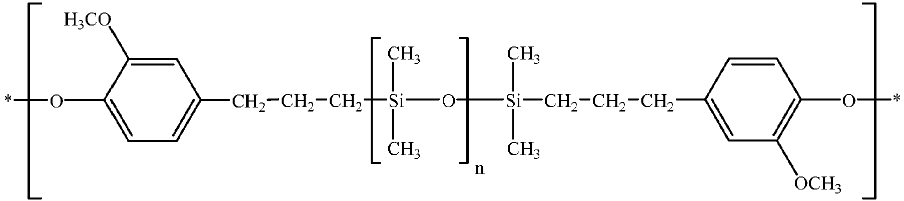 wherein n is 30 to 60;
the hydrogenated block copolymer comprises a polystyrene-poly(ethylene-butylene)-polystyrene triblock copolymer; and
the organophosphate flame retardant comprises bisphenol A bis(diphenyl phosphate).

10. An article comprising the composition of any one of claims 1-9.

11. The article of claim 10, prepared by a method selected from the group consisting of injection molding, sheet extrusion, profile extrusion, blow molding, compression molding, pressure forming, and foaming.

12. The article of claim 10 or 11, wherein
the first poly(phenylene ether) comprises poly(2,6-dimethyl-1,4-phenylene ether) having an intrinsic viscosity of 0.4 to 0.5 deciliter per gram, determined at 25 °C in chloroform by Ubbelohde viscometer;
the second poly(phenylene ether) comprises poly(2,6-dimethyl-1,4-phenylene ether); and, in the poly(phenylene ether)-polysiloxane block copolymer, the poly(phenylene ether) block comprises 2,6-dimethyl-1,4-phenylene ether units, and the polysiloxane block has the structure 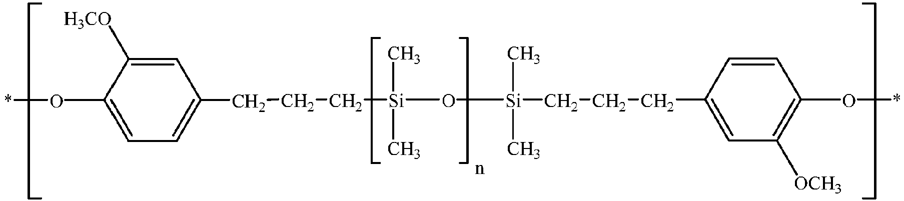 wherein n is 30 to 60;
the hydrogenated block copolymer comprises a polystyrene-poly(ethylene-butylene)-polystyrene triblock copolymer; and
the organophosphate flame retardant comprises bisphenol A bis(diphenyl phosphate).

13. The article of claim 10 or 11, wherein
the composition comprises
70 to 86 weight percent of the first poly(phenylene ether),
4 to 12 weight percent of the poly(phenylene ether)-polysiloxane block copolymer reaction product,
4 to 7 weight percent of the hydrogenated block copolymer, and
6 to 11 weight percent of an organophosphate flame retardant;
the first poly(phenylene ether) comprises poly(2,6-dimethyl-1,4-phenylene ether) having an intrinsic viscosity of 0.4 to 0.5 deciliter per gram, determined at 25 °C in chloroform by Ubbelohde viscometer;
the second poly(phenylene ether) comprises poly(2,6-dimethyl-1,4-phenylene ether); and, in the poly(phenylene ether)-polysiloxane block copolymer, the poly(phenylene ether) block comprises 2,6-dimethyl-1,4-phenylene ether units, and the polysiloxane block has the structure 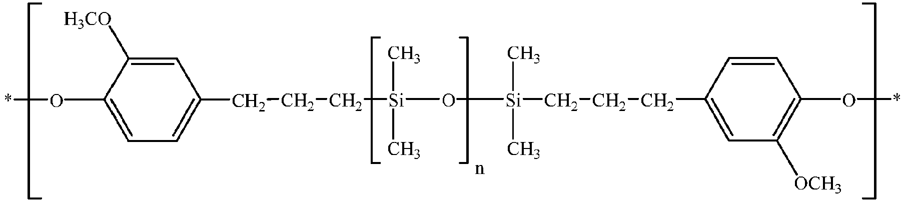 wherein n is 30 to 60;
the hydrogenated block copolymer comprises a polystyrene-poly(ethylene-butylene)-polystyrene triblock copolymer; and
the organophosphate flame retardant comprises bisphenol A bis(diphenyl phosphate).

14. The article of any one of claims 10-13, selected from the group consisting of electrical enclosures, battery enclosures, and electrical connectors.

15. The article of any one of claims 10-13, wherein the article is an electrical enclosure.

## Patentansprüche

1. Zusammensetzung, bezogen auf das Gesamtgewicht der Zusammensetzung, umfassend:
55,5 bis 90 Gew.-% eines ersten Poly(phenylenethers);
3 bis 17 Gew.-% eines Poly(phenylenether)-Polysiloxan-Blockcopolymer-Reaktionsprodukts, umfassend
einen zweiten Poly(phenylenether) und
ein Poly(phenylenether)-Polysiloxan-Blockcopolymer, umfassend
einen Poly(phenylenethers)-Block und
einen Polysiloxan-Block, umfassend im Durchschnitt 20 bis 80 Siloxan-Wiederholungseinheiten;
wobei das Reaktionsprodukt des Poly(phenylenether)-Polysiloxan-Blockcopolymers 1 bis 30 Gew.-% Siloxan-Wiederholungseinheiten und 70 bis 99 Gew.-% Phenylenether-Wiederholungseinheiten, bezogen auf das Gesamtgewicht des Reaktionsprodukts des Poly(phenylenether)-Polysiloxan-Blockcopolymers, umfasst;
3 bis 10 Gew.-% eines hydrierten Blockcopolymers aus einer alkenylaromatischen Verbindung und einem konjugierten Dien;
4 bis 13 Gew.-% eines Organophosphat-Flammschutzmittels;
0 bis 2 Gew.-% eines verstärkenden Füllstoffs;
0 bis 1 Gew.-% eines Haftvermittlers, ausgewählt aus der Gruppe bestehend aus (a) phenolischen Verbindungen mit einem Molekulargewicht von 94 bis 18.000 g/mol, (b) Polydiorganosiloxane mit angehängter Hydroxysilylgruppe der Formel 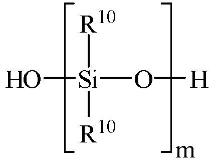
wobei m einen Wert von 2 bis 50 annimmt und jedes Vorkommen von R¹⁰ unabhängig von C₁-C₁₂-Hydrocarbyl ist, wobei 5 bis 60 Molprozent des Vorkommens von R¹⁰ unabhängig von C₆-C₁₂-Aryl sind; und (c) Kombinationen der (a) phenolischen Verbindungen und der (b) Polydiorganosiloxane mit angehängter Hydroxysilylgruppe; und
0 bis 0,5 Gew.-% eines Additionspolymers, umfassend Wiederholungseinheiten, die von einem Glycidylester einer α,β-ethyienisch ungesättigten Säure abgeleitet sind.

2. Zusammensetzung von Anspruch 1, wobei
der erste Poly(phenylenether) und der zweite Poly(phenylenether) und der Poly(phenylenether)-Block des Poly(phenylenether)-Polysiloxan-Blockcopolymers jeweils unabhängig Wiederholungseinheiten mit der Formel 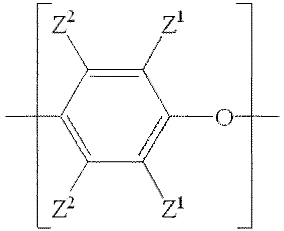
umfassen, wobei jedes Vorkommen von Z¹ unabhängig voneinander Halogen, unsubstituiertes oder substituiertes C₁-C₁₂-Hydrocarbyl ist, wobei die Hydrocarbylgruppe nicht tertiäres Hydrocarbyl, C₁-C₁₂-Hydrocarbylthio, C₁-C₁₂-Hydrocarbyloxy oder C₂-C₁₂-Halogenhydrocarbyloxy ist, wobei mindestens zwei Kohlenstoffatome die Halogen- und Sauerstoffatome trennen; und jedes Vorkommen von Z² unabhängig voneinander Wasserstoff, Halogen, unsubstituiertes oder substituiertes C₁-C₁₂-Hydrocarbyl ist, wobei die Hydrocarbylgruppe nicht tertiäres Hydrocarbyl, C₁-C₁₂-Hydrocarbylthio, C₁-C₁₂-Hydrocarbyloxy oder C₂-C₁₂-Halogenhydrocarbyloxy ist, wobei mindestens zwei Kohlenstoffatome die Halogen- und Sauerstoffatome trennen; und
der Polysiloxanblock des Poly(phenylenethers)-Polysiloxan-Blockcopolymers Wiederholungseinheiten der Formel umfasst, 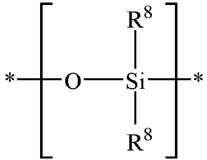
wobei jedes Vorkommen von R⁸ unabhängig voneinander C₁-C₁₂-Hydrocarbyl oder C₁-C₁₂-Halogenhydrocarbyl ist.

3. Zusammensetzung nach Anspruch 1 oder 2, wobei der erste Poly(phenylenether) Poly(2,6-dimethyl-1,4-phenylenether) eine intrinsische Viskosität von 0,4 bis 0,5 Deziliter pro Gramm aufweist, bestimmt mit einem Ubbelohde-Viskosimeter bei 25 °C in Chloroform.

4. Zusammensetzung nach einem der Ansprüche 1-3, wobei der zweite Poly(phenylenether) Poly(2,6-dimethyl-1,4-phenylenether) umfasst; und wobei der Poly(phenylenether)-Block in dem Poly(phenylenether)-Polysiloxan-Blockcopolymer 2,6-Dimethyl-1,4-phenylenethereinheiten umfasst und der Polysiloxan-Block die Struktur 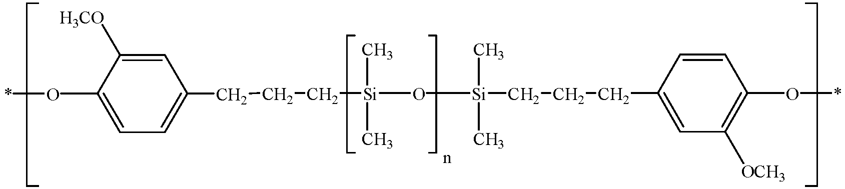 aufweist, wobei n einen Wert von 30 bis 60 annimmt.

5. Zusammensetzung nach einem der Ansprüche 1 bis 4, wobei das hydrierte Blockcopolymer ein Polystyrol-Poly(ethylen-butylen)-Polystyrol-Triblockcopolymer umfasst.

6. Zusammensetzung eines der Ansprüche 1-5, wobei das Organophosphat-Flammschutzmittel aus der Gruppe ausgewählt ist, die aus Triphenylphosphat, Tris(alkylphenyl)phosphaten, Hydrochinon-bis(diphenylphosphat), Resorcinbis(diphenylphosphat), Bisphenol-A-bis(diphenylphosphat), Tetrakis(2,6-dimethylphenyl)-1,3-phenylenbisphosphat und Kombinationen davon besteht.

7. Zusammensetzung eines der Ansprüche 1-5, wobei das Organophosphat-Flammschutzmittel Bisphenol-A-bis(diphenylphosphat) umfasst.

8. Zusammensetzung nach Anspruch 1, wobei
der erste Poly(phenylenether) Poly(2,6-dimethyl-1,4-phenylenether) mit einer intrinsischen Viskosität von 0,4 bis 0,5 Deziliter pro Gramm aufweist, bestimmt mit einem Ubbelohde-Viskosimeter bei 25 °C in Chloroform;
wobei der zweite Poly(phenylenether) Poly(2,6-dimethyl-1,4-phenylenether) umfasst; und wobei der Poly(phenylenether)-Block in dem Poly(phenylenether)-Polysiloxan-Blockcopolymer 2,6-Dimethyl-1,4-phenylenethereinheiten umfasst, und wobei der Polysiloxan-Block die Struktur 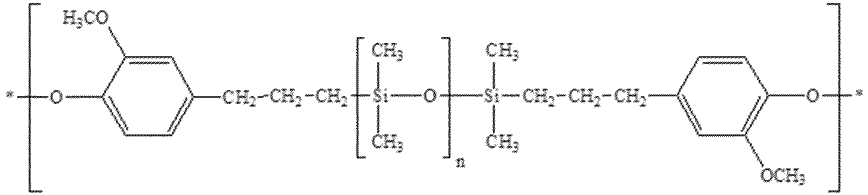
aufweist, wobei n einen Wert von 30 bis 60 annimmt;
wobei das hydrierte Blockcopolymer ein Polystyrol-Poly(ethylen-butylen)-Polystyrol-Triblockcopolymer umfasst; und
wobei das Organophosphat-Flammschutzmittel Bisphenol-A-bis(diphenylphosphat) umfasst.

9. Zusammensetzung nach Anspruch 1, wobei
die Zusammensetzung
70 bis 86 Gew.-% des ersten Poly(phenylenethers),
4 bis 12 Gew.-% des Reaktionsprodukts aus Poly(phenylenether)-Polysiloxan-Blockcopolymer,
4 bis 7 Gew.-% des hydrierten Blockcopolymers und
6 bis 11 Gew.-% des Organophosphat-Flammschutzmittels umfasst,
wobei der erste Poly(phenylenether) Poly(2,6-dimethyl-1,4-phenylenether) mit einer intrinsischen Viskosität von 0,4 bis 0,5 Deziliter pro Gramm umfasst, bestimmt mit einem Ubbelohde-Viskosimeter bei 25 °C in Chloroform;
wobei der zweite Poly(phenylenether) Poly(2,6-dimethyl-1,4-phenylenether) umfasst; und wobei der Poly(phenylenether)-Block in dem Poly(phenylenether)-Polysiloxan-Blockcopolymer 2,6-Dimethyl-1,4-phenylenethereinheiten umfasst und wobei der Polysiloxan-Block die Struktur 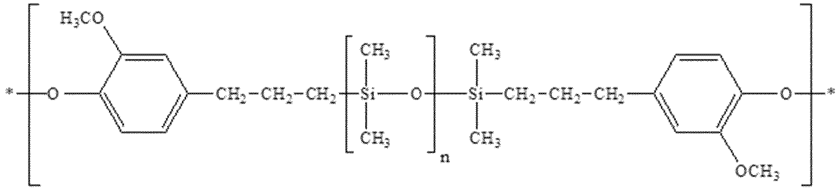
aufweist, wobei n einen Wert von 30 bis 60 annimmt;
wobei das hydrierte Blockcopolymer ein Polystyrol-Poly(ethylen-butylen)-Polystyrol-Triblockcopolymer umfasst; und
wobei das Organophosphat-Flammschutzmittel Bisphenol-A-bis(diphenylphosphat) umfasst.

10. Gegenstand, umfassend die Zusammensetzung eines der Ansprüche 1-9.

11. Gegenstand nach Anspruch 10, hergestellt nach einem Verfahren aus der Gruppe Spritzgießen, Folienextrusion, Profilextrusion, Blasformen, Formpressen, Pressformen und Aufschäumen.

12. Gegenstand nach Anspruch 10 oder 11, wobei
der erste Poly(phenylenether) Poly(2,6-dimethyl-1,4-phenylenether) mit einer intrinsischen Viskosität von 0,4 bis 0,5 Deziliter pro Gramm umfasst, bestimmt mit einem Ubbelohde-Viskosimeter bei 25 °C in Chloroform;
wobei der zweite Poly(phenylenether) Poly(2,6-dimethyl-1,4-phenylenether) umfasst; und wobei der Poly(phenylenether)-Block in dem Poly(phenylenether)-Polysiloxan-Blockcopolymer 2,6-Dimethyl-1,4-phenylenethereinheiten umfasst und wobei der Polysiloxan-Block die Struktur 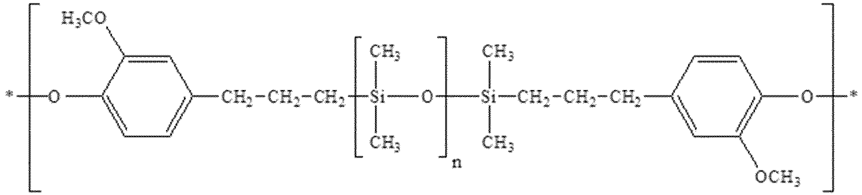 aufweist, wobei n einen Wert von 30 bis 60 annimt;
wobei das hydrierte Blockcopolymer ein Polystyrol-Poly(ethylen-butylen)-Polystyrol-Triblockcopolymer umfasst; und
wobei das Organophosphat-Flammschutzmittel Bisphenol-A-bis(diphenylphosphat) umfasst.

13. Gegenstand nach Anspruch 10 oder 11, wobei
die Zusammensetzung
70 bis 86 Gew.-% des ersten Poly(phenylenethers),
4 bis 12 Gew.-% des Reaktionsprodukts aus Poly(phenylenether)-Polysiloxan-Blockcopolymer,
4 bis 7 Gew.-% des hydrierten Blockcopolymers und
6 bis 11 Gew.-% eines Organophosphat-Flammschutzmittels umfasst;
wobei der erste Poly(phenylenether) Poly(2,6-dimethyl-1,4-phenylenether) mit einer intrinsischen Viskosität von 0,4 bis 0,5 Deziliter pro Gramm umfasst, bestimmt mit einem Ubbelohde-Viskosimeter bei 25 °C in Chloroform;
wobei der zweite Poly(phenylenether) Poly(2,6-dimethyl-1,4-phenylenether) umfasst; und wobei der Poly(phenylenether)-Block in dem Poly(phenylenether)-Polysiloxan-Blockcopolymer 2,6-Dimethyl-1,4-phenylenethereinheiten umfasst und wobei der Polysiloxan-Block die Struktur 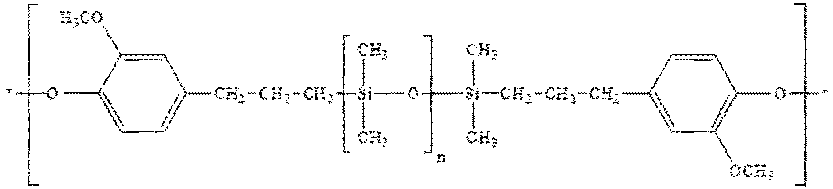 aufweist, wobei n einen Wert von 30 bis 60 annimt;
wobei das hydrierte Blockcopolymer ein Polystyrol-Poly(ethylen-butylen)-Polystyrol-Triblockcopolymer umfasst; und
wobei das Organophosphat-Flammschutzmittel Bisphenol-A-bis(diphenylphosphat) umfasst.

14. Gegenstand nach einem der Ansprüche 10-13, ausgewählt aus der Gruppe bestehend aus elektrischen Gehäusen, Batteriegehäusen und elektrischen Steckverbindern.

15. Gegenstand nach einem der Ansprüche 10-13, wobei der Gegenstand ein elektrisches Gehäuse ist.

## Revendications

1. Composition comprenant, par rapport au poids total de la composition :
55,5 à 90 % en poids d'un premier poly(phénylène-éther) ;
3 à 17 % en poids d'un produit réactionnel de copolymère à blocs de poly(phénylène-éther)-polysiloxane comprenant
un deuxième poly(phénylène-éther), et
un copolymère à blocs de poly(phénylène-éther)-polysiloxane comprenant
un bloc poly(phénylène-éther), et
un bloc polysiloxane comprenant, en moyenne, 20 à 80 motifs répétitifs siloxanes ;
dans laquelle le produit réactionnel de copolymère à blocs de poly(phénylène-éther)-polysiloxane comprend 1 à 30 % en poids de motifs répétitifs siloxanes et 70 à 99 % en poids de motifs répétitifs phénylène-éthers, par rapport au poids total du produit réactionnel de copolymère à blocs de poly(phénylène-éther)-polysiloxane ;
3 à 10 % en poids d'un copolymère à blocs hydrogéné d'un composé alcényle aromatique et d'un diène conjugué ;
4 à 13 % en poids d'un retardateur de flamme organophosphoré ;
0 à 2 % en poids d'une charge de renforcement ;
0 à 1 % en poids d'un promoteur d'adhérence choisi dans le groupe constitué par (a) les composés phénoliques ayant une masse moléculaire de 94 à 18 000 g/mol, mesurée comme défini dans la demande ; (b) les polydiorganosiloxanes à terminaison hydroxysilyle de formule 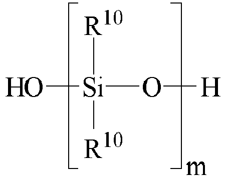
dans laquelle m vaut de 2 à 50, et chaque occurrence de R¹⁰ est indépendamment un hydrocarbyle en C₁ à C₁₂, sous réserve que 5 à 60 % en moles des occurrences de R¹⁰ soient indépendamment un aryle en C₆ à C₁₂ ; et (c) les combinaisons des composés phénoliques (a) et des polydiorganosiloxanes à terminaison hydroxysilyle (b) ; et
0 à 0,5 % en poids d'un polymère d'addition comprenant des motifs répétitifs dérivés d'un ester glycidylique d'un acide à insaturation α,β-éthylénique.

2. Composition selon la revendication 1, dans laquelle
chacun parmi le premier poly(phénylène-éther) et le deuxième poly(phénylène-éther) et le bloc poly(phénylène-éther) du copolymère à blocs de poly(phénylène-éther)-polysiloxane comprend indépendamment des motifs répétitifs de formule 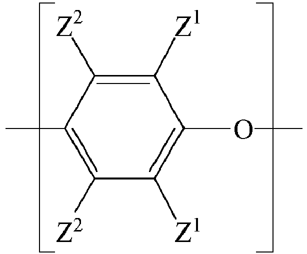
dans laquelle chaque occurrence de Z¹ est indépendamment un halogène, un hydrocarbyle en C₁ à C₁₂ substitué ou non substitué sous réserve que le groupe hydrocarbyle ne soit pas un hydrocarbyle tertiaire, un hydrocarbylthio en C₁ à C₁₂, un hydrocarbyloxy en C₁ à C₁₂, ou un halogénohydrocarbyloxy en C₂ à C₁₂ dont au moins deux atomes de carbone séparent les atomes d'halogène et d'oxygène ; et chaque occurrence de Z² est indépendamment un hydrogène, un halogène, un hydrocarbyle en C₁ à C₁₂ substitué ou non substitué sous réserve que le groupe hydrocarbyle ne soit pas un hydrocarbyle tertiaire, un hydrocarbylthio en C₁ à C₁₂, un hydrocarbyloxy en C₁ à C₁₂, ou un halogénohydrocarbyloxy en C₂ à C₁₂ dont au moins deux atomes de carbone séparent les atomes d'halogène et d'oxygène ; et
le bloc polysiloxane du copolymère à blocs de poly(phénylène-éther)-polysiloxane comprend des motifs répétitifs de formule 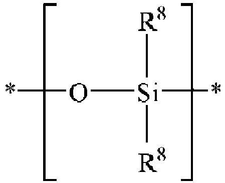
dans laquelle chaque occurrence de R⁸ est indépendamment un hydrocarbyle en C₁ à C₁₂ ou un halogénohydrocarbyle en C₁ à C₁₂.

3. Composition selon la revendication 1 ou 2, dans laquelle le premier poly(phénylène-éther) comprend un poly(2,6-diméthyl-1,4-phénylène-éther) ayant une viscosité intrinsèque, déterminée à 25 °C dans du chloroforme au moyen d'un viscosimètre Ubbelohde, de 0,4 à 0,5 décilitre par gramme.

4. Composition selon l'une quelconque des revendications 1 à 3, dans laquelle le deuxième poly(phénylène-éther) comprend un poly(2,6-diméthyl-1,4-phénylène-éther) ; et dans laquelle, dans le copolymère à blocs de poly(phénylène-éther)-polysiloxane, le bloc poly(phénylène-éther) comprend des motifs 2,6-diméthyl-1,4-phénylène-éther, et le bloc polysiloxane a la structure 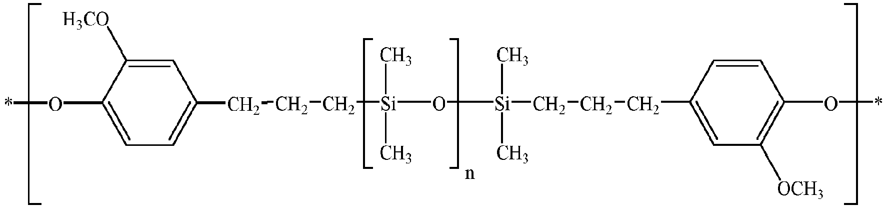 dans laquelle n vaut de 30 à 60.

5. Composition selon l'une quelconque des revendications 1 à 4, dans laquelle le copolymère à blocs hydrogéné comprend un copolymère tribloc de polystyrène-poly(éthylène-butylène)-polystyrène.

6. Composition selon l'une quelconque des revendications 1 à 5, dans laquelle le retardateur de flamme organophosphoré est choisi dans le groupe constitué par le phosphate de triphényle, les phosphates de tris(alkylphényle), le bis(diphénylphosphate) d'hydroquinone, le bis(diphénylphosphate) de résorcinol, le bis(diphénylphosphate) de bisphénol A, le 1,3-phénylènebisphosphate de tétrakis(2,6-diméthylphényle), et leurs combinaisons.

7. Composition selon l'une quelconque des revendications 1 à 5, dans laquelle le retardateur de flamme organophosphoré comprend du bis(diphénylphosphate) de bisphénol A.

8. Composition selon la revendication 1, dans laquelle
le premier poly(phénylène-éther) comprend un poly(2,6-diméthyl-1,4-phénylène-éther) ayant une viscosité intrinsèque, déterminée à 25 °C dans du chloroforme au moyen d'un viscosimètre Ubbelohde, de 0,4 à 0,5 décilitre par gramme ;
le deuxième poly(phénylène-éther) comprend un poly(2,6-diméthyl-1,4-phénylène-éther) ; et
dans le copolymère à blocs de poly(phénylène-éther)-polysiloxane, le bloc poly(phénylène-éther) comprend des motifs 2,6-diméthyl-1,4-phénylène-éther, et le bloc polysiloxane a la structure 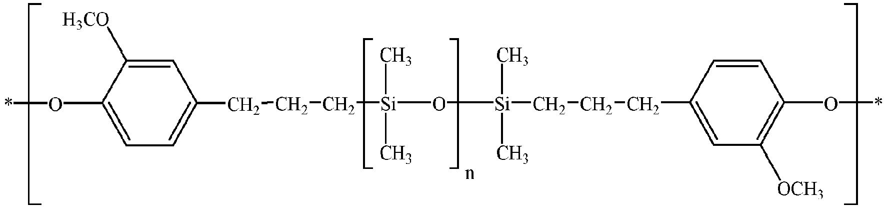
dans laquelle n vaut de 30 à 60 ;
le copolymère à blocs hydrogéné comprend un copolymère tribloc de polystyrène-poly(éthylène-butylène)-polystyrène ; et
le retardateur de flamme organophosphoré comprend du bis(diphénylphosphate) de bisphénol A.

9. Composition selon la revendication 1, dans laquelle
la composition comprend
70 à 86 % en poids du premier poly(phénylène-éther),
4 à 12 % en poids du produit réactionnel de copolymère à blocs de poly(phénylène-éther)-polysiloxane,
4 à 7 % en poids du copolymère à blocs hydrogéné, et
6 à 11 % en poids du retardateur de flamme organophosphoré ;
le premier poly(phénylène-éther) comprend un poly(2,6-diméthyl-1,4-phénylène-éther) ayant une viscosité intrinsèque, déterminée à 25 °C dans du chloroforme au moyen d'un viscosimètre Ubbelohde, de 0,4 à 0,5 décilitre par gramme ;
le deuxième poly(phénylène-éther) comprend un poly(2,6-diméthyl-1,4-phénylène-éther) ; et
dans le copolymère à blocs de poly(phénylène-éther)-polysiloxane, le bloc poly(phénylène-éther) comprend des motifs 2,6-diméthyl-1,4-phénylène-éther, et le bloc polysiloxane a la structure 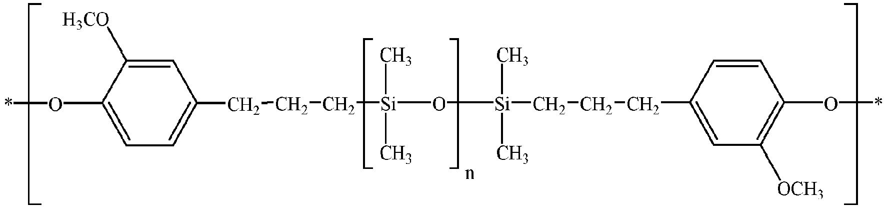
dans laquelle n vaut de 30 à 60 ;
le copolymère à blocs hydrogéné comprend un copolymère tribloc de polystyrène-poly(éthylène-butylène)-polystyrène ; et
le retardateur de flamme organophosphoré comprend du bis(diphénylphosphate) de bisphénol A.

10. Article comprenant la composition de l'une quelconque des revendications 1 à 9.

11. Article selon la revendication 10, préparé par une méthode choisie dans le groupe constitué par un moulage par injection, une extrusion de feuilles, une extrusion de profilés, un moulage par soufflage, un moulage par compression, un façonnage sous pression, et une expansion.

12. Article selon la revendication 10 ou 11, dans lequel
le premier poly(phénylène-éther) comprend un poly(2,6-diméthyl-1,4-phénylène-éther) ayant une viscosité intrinsèque, déterminée à 25 °C dans du chloroforme au moyen d'un viscosimètre Ubbelohde, de 0,4 à 0,5 décilitre par gramme ;
le deuxième poly(phénylène-éther) comprend un poly(2,6-diméthyl-1,4-phénylène-éther) ; et
dans le copolymère à blocs de poly(phénylène-éther)-polysiloxane, le bloc poly(phénylène-éther) comprend des motifs 2,6-diméthyl-1,4-phénylène-éther, et le bloc polysiloxane a la structure 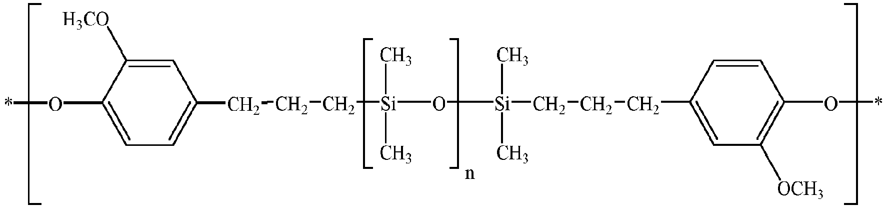
dans laquelle n vaut de 30 à 60 ;
le copolymère à blocs hydrogéné comprend un copolymère tribloc de polystyrène-poly(éthylène-butylène)-polystyrène ; et
le retardateur de flamme organophosphoré comprend du bis(diphénylphosphate) de bisphénol A.

13. Article selon la revendication 10 ou 11, dans lequel
la composition comprend
70 à 86 % en poids du premier poly(phénylène-éther),
4 à 12 % en poids du produit réactionnel de copolymère à blocs de poly(phénylène-éther)-polysiloxane,
4 à 7 % en poids du copolymère à blocs hydrogéné, et
6 à 11 % en poids d'un retardateur de flamme organophosphoré ;
le premier poly(phénylène-éther) comprend un poly(2,6-diméthyl-1,4-phénylène-éther) ayant une viscosité intrinsèque, déterminée à 25 °C dans du chloroforme au moyen d'un viscosimètre Ubbelohde, de 0,4 à 0,5 décilitre par gramme ;
le deuxième poly(phénylène-éther) comprend un poly(2,6-diméthyl-1,4-phénylène-éther) ; et
dans le copolymère à blocs de poly(phénylène-éther)-polysiloxane, le bloc poly(phénylène-éther) comprend des motifs 2,6-diméthyl-1,4-phénylène-éther, et le bloc polysiloxane a la structure 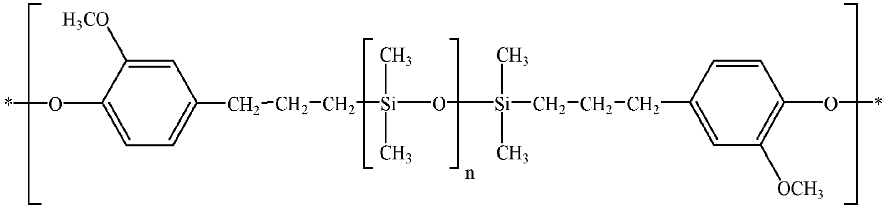
dans laquelle n vaut de 30 à 60 ;
le copolymère à blocs hydrogéné comprend un copolymère tribloc de polystyrène-poly(éthylène-butylène)-polystyrène ; et
le retardateur de flamme organophosphoré comprend du bis(diphénylphosphate) de bisphénol A.

14. Article selon l'une quelconque des revendications 10 à 13, choisi dans le groupe constitué par les boîtiers électriques, les boîtiers de batterie, et les connecteurs électriques.

15. Article selon l'une quelconque des revendications 10 à 13, lequel article est un boîtier électrique.
